# EUROPÄISCHE PATENTSCHRIFT

(11) **EP 0 712 789 B1**
(45) Veröffentlichungstag und Bekanntmachung des Hinweises auf die Patenterteilung: **10.03.1999**
(21) Anmeldenummer: 95116386.4
(22) Anmeldetag: 18.10.1995
(51) Int. Cl.: B65D 75/32, B65D 81/02

(54) **Verpackung für Flaschen**
Packaging for bottles
Emballage pour bouteilles

(30) Priorität: 21.10.1994 DE 9416970 U
(43) Veröffentlichungstag der Anmeldung: 22.05.1996
(73) Patentinhaber: Schenk, Roland, D-72336 Balingen (DE)
(72) Erfinder: Schenk, Roland, D-72336 Balingen (DE)
(74) Vertreter: Möbus, Rudolf, Dipl.-Ing.

(56) Entgegenhaltungen:
- DE-U- 9 319 553
- GB-A- 1 291 714
- US-A- 2 020 454
- US-A- 3 288 278

## Beschreibung

Die Erfindung betrifft eine Verpackung für eine oder mehrere Flaschen gemäß dem Oberbegriff des Anspruchs 1.

Verpackungen für Flaschen aus recyceltem Altpapier sind bekannt. Üblicherweise werden sie als Formschalen aus Papierfaserguß hergestellt, wobei die Formschalen genau auf die Kontur der zu verpackenden Flaschen abgestimmt sind. Damit werden die verpackten Flaschen über ihre ganze Länge formschlüssig umschlossen, was für die Sicherheit der Flaschen von Vorteil ist. Das bedeutet aber auch, daß für jede Flaschenform eine entsprechende Formschale hergestellt werden muß. Aus der US-A-2 020 454 ist eine Flaschenverpackung für mehrere Flaschen bekannt, die die Flaschen nur an wenigen Stellen formschlüssig umgreift. Es können daher unterschiedlich geformte Flaschen in dieser Verpackung transportiert werden. Bei der bekannten Verpackung sind jedoch die einzelnen Halbschalen untrennbar miteinander verbunden. Außerdem sind die oberen und unteren Halbschalen an einem Seitenrand der Packeinheit scharnierartig verbunden. Da auch - je nach Bedarf - eine unterschiedliche Anzahl von Flaschen in einer Packeinheit verpackt werden, müssen bei dieser Konstruktion für jede gewünschte Anzahl von Flaschen in einer Packeinheit entsprechend unterschiedliche Verpackungen hergestellt werden.

Das bringt eine Reihe von Nachteilen mit sich. Für die Herstellung der verschiedenen Verpackungen werden eine Vielzahl unterschiedlicher Produktionswerkzeuge benötigt, deren Auslastung unbefriedigend sein muß. Mit einer Vielzahl untereinander nicht austauschbarer Verpackungen ergeben sich notwendigerweise Lagerhaltungs- und Verfügbarkeitsprobleme.

Der vorliegenden Erfindung liegt die Aufgabe zugrunde, eine Verpackung für Flaschen zu schaffen, welche für verschiedene Flaschenformen einsetzbar ist und die oben genannten Nachteile vermeidet.

Diese Aufgabe wird mit einer Verpackung für eine oder mehrere Flaschen mit den Merkmalen des Anspruchs 1 gelöst.

Damit kann diese eine Verpackung für verschiedene Flaschensorten verwendet werden, welche nur an einigen ausgewählten Stellen die gleiche Form und Größe zu besitzen brauchen.

Vorteilhafterweise können die Ausformungen der Halbschalen die Flaschen insbesondere am unteren Bauchbereich und am Flaschenhals umgreifen. Gerade an diesen Stellen haben in der Regel Flaschen verschiedenster Konturen die gleiche Form und Größe, und es ist für deren Bruchsicherheit hinreichend, daß die Verpackung die Flaschen nur an diesen Stellen formschlüssig umgreift.

Große Vorteile ergeben sich dadurch, daß bei Verpackungen aus mehreren Halbschalen die Verbindungsstellen zwischen den einzelnen Halbschalen als Abreißkante ausgebildet sind. So können viele miteinander verbundene Halbschalen als Teil eines im Prinzip Endlosbandes hergestellt werden und je nach Bedarf in entsprechende Packeinheiten Zerlegt werden, ohne daß der Verbund der Schalen in einer Packeinheit aufgelöst wird.

Zur Herstellung der Verpackung ist somit nur eine Ausführung eines Produktionswerkzeuges notwendig, womit die Herstellungskosten günstig beeinflußt werden. Vom fertigen Produkt hat der Anwender nur eine Sorte von Flaschenverpackung zu beschaffen und zu lagern, was die Lagerhaltungs- und Verfügbarkeitsprobleme optimal verringert.

Schließlich können die Halbschalen nach außen ebene Ausformungen aufweisen, welche ein Wegrollen der Verpackung verhindern. Dies ist für eine Verpackung für einzelne Flaschen besonders sinnvoll, und es ermöglicht außerdem ein dichtes Zusammenlegen der Verpackungen in einen Umkarton.

Nachfolgend wird ein bevorzugtes Ausführungsbeispiel anhand der Zeichnung näher erläutert:

Im einzelnen zeigen:
- Fig. 1: eine Frontansicht einer Halbschale einer Verpackung;
- Fig. 2: eine Seitenansicht der Halbschale der Verpackung aus Fig. 1.

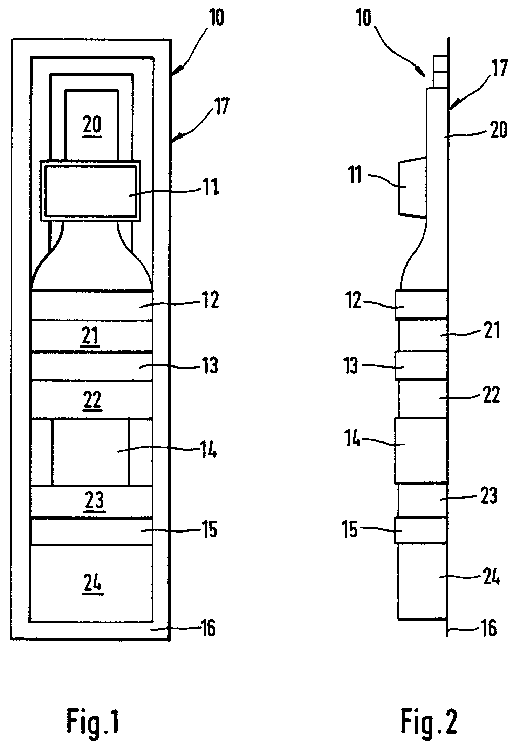

Fig. 1 zeigt eine Frontansicht einer Halbschale 10 einer Verpackung für Flaschen mit mehreren Ausformungen 11, 12, 13, 14, 15, die jeweils nach außen eben geformt sind. Auf der Innenseite weist die Halbschale 10 mehrere Anlagebereiche 20, 21, 22, 23, 24 auf, die eine zu verpackende Flasche an Stellen formschlüssig umgreifen, die bei einer Vielzahl von Flaschen standardisierte Maße aufweisen. Die länglichen Teile 17 der flachen Umrandung 16 der Halbschale 10 bilden mögliche Abreißkanten einer Halbschale 10 zur benachbarten Halbschale. Fig. 2 zeigt eine Seitenansicht der Halbschale 10 aus Fig. 1. Hier sind die ebenen Ausformungen 11 bis 15 deutlich zu erkennen.

## Patentansprüche

1. Verpackung für eine oder mehrere Flaschen, bestehend aus einer oder mehreren, miteinander verbundenen ersten Halbschalen (10) und einer oder mehreren, miteinander verbundenen zweiten Halbschalen (10), dadurch gekennzeichnet, daß sie aus recyceltem Altpapier hergestellt ist, wobei in den Halbschalen (10) jeweils Ausformungen (20 bis 24) vorgesehen sind, welche Flaschen verschiedener Konturen nur an wenigen ausgewählten Stellen formschlüssig umgreifen, und wobei die Halbschalen (10) Teile eines Bandes aus miteinander verbundenen Halbschalen (10) sind, deren Verbindungsstellen als Abreißkanten (17) ausgebildet sind.

2. Verpackung nach Anspruch 1, dadurch gekennzeichnet, daß die Ausformungen (20 bis 24) der Halbschalen (10) die Flaschen insbesondere am unteren Bauchbereich und am Flaschenhals umgreifen.

3. Verpackung nach Anspruch 1 oder 2, dadurch gekennzeichnet, daß die Halbschalen (10) nach außen ebene Ausformungen (11 bis 15) aufweisen, welche ein Wegrollen der Verpackung verhindern.

## Claims

1. Packaging for one or more bottles, comprising one of more interconnected first semi-shells (10) and one or more interconnected second semi-shells (10), **characterised in that** they are made of recycled waste paper, and in the semi-shells (10) are provided respective moulded shapes (20 to 24) which positively encase bottles of different contours on only a few selected points, and the semi-shells (10) are parts of a band of interconnected semi-shells (10) the connecting points of which are configured as tear-off edges (17).

2. Packaging according to Claim 1, **characterised in that** the moulded shapes (20 to 24) of the semi-shells (10) encase the bottles in particular in the lower bottle area and at the bottle neck.

3. Packaging according to Claim 1 or 2, **characterised in that** the semi-shells (10) have outwardly plane contours (11 to 15) which prevent the packaging from rolling away.

## Revendications

1. Emballage pour une ou plusieurs bouteilles, formé d'une ou de plusieurs premières demicoquilles (10) reliées ensemble et d'une ou de plusieurs deuxièmes demi-coquilles (10) reliées ensemble, caractérisé en ce qu'il est fabriqué en vieux papier recyclé et en ce que des parties moulées en saillie (20 à 24) sont prévues dans les demi-coquilles (10) pour maintenir des bouteilles de formes différentes par liaison de forme uniquement en quelques endroits choisis, les demi-coquilles (10) faisant partie d'une bande de demi-coquilles (10) reliées les unes aux autres, dont les zones de liaison forment des bords de rupture (17).

2. Emballage selon la revendication 1, caractérisé en ce que les parties moulées en saillie (20 à 24) des demi-coquilles (10) maintiennent les bouteilles en particulier à la partie inférieure du ventre et au niveau du col.

3. Emballage selon la revendication 1 ou 2, caractérisé en ce que les demi-coquilles (10) comprennent des parties moulées plates (11 à 15) en saillie vers l'extérieur, qui empêchent un roulement de l'emballage.
